(19) Europäisches Patentamt
European Patent Office
Office européen des brevets

(11) Publication number: 0 283 092 B1

# (12) EUROPEAN PATENT SPECIFICATION

(45) Date of publication of patent specification: 23.10.91 Bulletin 91/43

(51) Int. Cl.$^5$: C08G 67/02

(21) Application number: 88200468.2

(22) Date of filing: 11.03.88

## (54) Process for removing palladium catalyst remnants from copolymers of carbon monoxide with one or more olefinically unsaturated compounds.

(30) Priority: 13.03.87 NL 8700604

(43) Date of publication of application: 21.09.88 Bulletin 88/38

(45) Publication of the grant of the patent: 23.10.91 Bulletin 91/43

(84) Designated Contracting States: BE CH DE ES FR GB IT LI NL SE

(56) References cited:
EP-A- 0 213 671
EP-A- 0 227 135

(73) Proprietor: SHELL INTERNATIONALE RESEARCH MAATSCHAPPIJ B.V.
Carel van Bylandtlaan 30
NL-2596 HR Den Haag (NL)

(72) Inventor: Van Broekhoven, Johannes Adrianus Maria
Badhuisweg 3
NL-1031 CM Amsterdam (NL)

(74) Representative: Tuijn, Jan Warnaar et al
Shell Internationale Research Maatschappij B.V., Patents, Licensing & Trade Marks Division, P.O. Box 302
NL-2501 CH The Hague (NL)

EP 0 283 092 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

The invention relates to a process for removing palladium catalyst remnants from copolymers of carbon monoxide with one or more olefinically unsaturated compounds.

High molecular weight linear polymers of carbon monoxide with one or more olefinically unsaturated compounds (the latter for the sake of brevity referred to as A), in which the monomer units occur in alternating order and which therefore consist of units of the general formula $\{CO-(A')\}$, wherein A' represents a monomer unit derived from a monomer A used, can be prepared by using palladium-containing catalyst compositions.

The above-described polymers have excellent mechanical properties, notably very high strength, stiffness and impact resistance. The use of the palladium-containing compositions as catalysts has the drawback that copolymers are produced that have a relatively high content of palladium catalyst remnants. The presence of palladium in the copolymers hampers the easy processing of the generally high-melting polymers and adversely affects the thermostability of the copolymers.

Prior research of the Applicants have resulted in the finding of a process for removing palladium catalyst remnants from copolymers of carbon monoxide with one or more other olefinically unsaturated hydrocarbons, that have been prepared in the presence of palladium bisphosphine catalysts, which process comprises contacting the copolymers with an organic bidentate phosphine complexing agent.

Continued research on this subject has now led to the findings that a) other copolymers may be subjected to the same process as found at earlier date, b) the same process is applicable to copolymers that have been prepared with other catalyst e.g. palladium-arsines or -amines, and c) other complexing agents may be employed.

The present patent application therefore is concerned with a process for removing palladium catalyst remnants from copolymers of carbon monoxide with one or more olefinically unsaturated compounds comprising contacting the copolymers with a complexing agent for palladium, such process being other than the contacting of copolymers of carbon monoxide and one or more olefinically unsaturated hydrocarbons that have been prepared in the presence of a palladium-bisphosphine catalyst, with an organic bidentate phosphine complexing agent.

Suitable olefinically unsaturated compounds which can be polymerized with carbon monoxide are both compounds consisting exclusively of carbon and hydrogen, and compounds which, in addition to carbon and hydrogen, contain one or more hetero-atoms. Preference is given to the preparation of polymers of carbon monoxide with one or more olefinically unsaturated hydrocarbons. Examples of suitable hydrocarbon monomers are ethene and other α-olefins, such as propene, butene-1, hexene-1 and octene-1, as well as styrene and alkyl-substituted styrenes, such as para-methyl styrene and para-ethylstyrene. The process of the invention is especially suited for the treatment of copolymers of carbon monoxide with ethene and for the preparation of terpolymers of carbon monoxide with ethene and another olefinically unsaturated hydrocarbon, propene in particular.

Palladium-containing catalyst compositions that are suitable for use in the preparation of the relevant copolymers are, inter alia, π-allyl$[(C_6H_5)_3P]_2PdCl$, and $[(C_6H_5)_3P]_4Pd$. Preference is given to the use of palladium-containing catalyst compositions based upon a) a palladium compound, b) an organic compound comprising at least one element chosen from the group made up of phosphorus, arsenic, antimony and nitrogen, and c) an anion of an acid with a pKa of less than 6.

The palladium compound in the catalyst is preferably a palladium salt of a carboxylic acid and in particular palladium acetate.

As examples of compounds which can be employed in the preferred catalyst compositions as the component b), may be mentioned

1) triaryl phosphines, such as triphenyl phosphine,
tri (2-methyl-phenyl) phosphine,
tri (2-methoxy-phenyl) phosphine, and
tri (1-naphthyl) phosphine,

2) compounds of the general formula

```
    X       Y
  /   \   /   \
 N  =  C - C  =  N,
```

wherein X and Y represent similar or different organic bridging groups, each having three or four atoms in the bridge at least two of which are carbon atoms, such as 2,2'-bipyridine and 1,10-phenanthroline,

3) compounds in which one phosphorus atom and one or more nitrogen atoms, which atoms bear no hydrogen are present, and in which each one of the nitrogen atoms is connected to the phosphorus atom via an organic bridging group having at least one carbon atom in the bridge, such as
2-cyano-ethyl diphenyl phosphine,
tris (2-cyano-ethyl) phosphine,
2-pyridyl diphenyl phosphine,
bis (2-pyridyl) phenyl phosphine, and
3-(diphenyl-phosphino)-N, N-dimethyl-propion amide,

4) compounds of the general formula $R_1R_2M_1-R-M_2R_3R_4$, wherein $M_1$ is arsenic or antimony, $M_2$ is

an element with an atomic number lower than that of $M_1$ and chosen from the group made up of arsenic, phosphorus and nitrogen, $R_1$, $R_2$, $R_3$ and $R_4$ represent similar or different hydrocarbon groups which may or may not be substituted with polar groups and R represents a bivalent bridging group having 2-4 atoms in the bridge, such as

1-(diphenyl-phosphino), 3-(diphenyl-arsino) propane,
1-(diphenyl-phosphino), 3-(diphenyl-stibino) propane,
1-(diphenyl-arsino), 3-(dimethyl-amino) propane, and
1-(diphenyl-phosphino), 2-(diphenyl-arsino) ethane,

5) compounds of the general formula $R_1R_2M$-R-$MR_3R_4$, wherein M is an element chosen from the group made up of phosphorus, arsenic and antimony, and wherein $R_1$, $R_2$, $R_3$ and $R_4$ and R have the meanings given hereinbefore, such as

1,3-bis (diphenyl-arsino) propane,
1,3-bis (diphenyl-phosphino) propane,
1,4-bis (diphenyl-phosphino) butane,
1,2-bis (diphenyl-phosphino) ethane,
1,3-bis[di (4-methoxy-phenyl) phosphino] propane,
2-methyl-2-(methyl-diphenyl-phosphino)-1,3 -bis (diphenyl-phosphino) propane, and
N, N, $N^1$, $N^1$-tetrakis (diphenyl-phosphino-methyl) ethylene diamine.

The compound which is employed in the catalyst compositions as the component b) is preferably a bisphosphine of the general formula $(R_5)_2P$-$R_6$-$P(R_5)_2$, wherein $R_5$ represents a polar-substituted aryl group containing at least one polar substituent, preferably an alkoxy group and more in particular a methoxy group, in a position ortho in respect to phosphorus and wherein $R_6$ represents a bivalent bridging group having three carbon atoms in the bridge. Examples of such compounds are

1,3-bis[di (2-methoxy-phenyl) phosphino] propane,
1,3-bis[di (2,4-dimethoxy-phenyl) phosphino] propane,
1,3-bis[di (2,6-dimethoxy-phenyl) phosphino] propane, and
1,3-bis[di (2,4,6-trimethyl-phenyl) phosphino] propane.

The component c) employed in the preferred catalyst compositions is preferably an anion of an acid with a pKa of less than 4 (determined in aqueous solution at 18°C) and particularly an anion of an acid with a pKa of less than 2. Special preference is given to an anion of a sulphonic acid, such as paratoluenesulphonic acid, or an anion of a carboxylic acid, such as trifluoro acetic acid. Component c) can be incorporated in the catalyst compositions either in the form of an acid and/or in the form of a salt. Suitable salts are, inter alia, non-noble transition metal salts, such as copper, nickel, chronium, iron, vanadyl, zirconium, uranyl and cerium salts and main group metal salts, such as aluminium, tin, and antimony salts. Halides suitable for use as the component c) in the catalyst compositions are the halides of tin and germanium. Instead of metal salts, quaternary phosphonium salts, such as methyl triphenyl phosphonium para-tosylate, can be employed in the catalyst compositions as the component c).

Optionally, in the catalyst compositions the components a) and b) may be combined for use in a single compound. An example of such a compound is the complex $Pd(CH_3CN)_2(O_3S$-$C_6H_4$-$CH_3)_2$ which can be prepared by the reaction of palladium chloride with the silver salt of para-toluenesulphonic acid in acetonitrile as the solvent. The components b) and c), too, may optionally be used combined in a single compound. Compounds which are eligible for this purpose are sulphonic acids of the general formula $R_7R_8P$-$R_9$-$SO_3H$, wherein $R_7$ and $R_8$ represent similar or different hydrocarbon groups which may or may not be substituted with polar groups and $R_9$ is a bivalent bridging group having 1-4 carbon atoms in the bridge, such as ortho-(diphenyl-phosphino) benzene sulphonic acid, 2-(diphenyl-phosphino) ethane sulphonic acid, and 3-(diphenyl-phosphino) propane sulphonic acid.

In addition to components a), b) and c) or combinations thereof, the catalyst compositions may also include promoters. Examples of suitable promoters are peroxides, such as di-tert.butyl peroxide, aliphatic nitro-compounds, such as 1-nitro-propane, organic nitrites, such as butyl nitrite, aromatic nitro-compounds, such as nitro-benzene, 4-isopropyl-nitro benzene, 3-chloro-4-methyl-nitro benzene, 3,4-dichloro-nitro benzene, 3-(trifluoromethyl) nitro benzene and 4-methyl-1,3-dinitro benzene, quinones, such as 1,4-benzoquinone and tetramethyl 1,4-benzoquinone, ethers, such as tetrahydrofuran, crown ethers, such as 18 crown 6 and 15 crown 5, esters, such as ethyleneglycol diacetate and ketones, such as acetone. The preferred promoter is a 1,4-quinone.

The preparation of the copolymers is preferably carried out at a temperature of 20-200°C and a pressure of $10^2$ to 2-$10^4$ kPa and in particular at a temperature of 30-150°C and a pressure of 2-$10^3$ to $10^4$ kPa. The molar ratio of the olefinically unsaturated compounds to carbon monoxide employed in copolymerization is preferably 10 : 1-1 : 5 and in particular 5 : 1-1 : 5.

In the process of the invention the palladium-containing copolymers are contacted with a complexing agent for palladium. The contacting of the copolymers with the complexing agent may suitably be carried out in an organic liquid in which the polymers are insoluble and the palladium complex formed can be dissolved. Very suitable organic liquids are lower alcohols,

such as methanol and ethanol. Thus, the product obtained is a copolymer having a reduced palladium content and, therefore, better thermal stability. Moreover, a palladium-containing solution is obtained, from which the palladium complex formed can be separated. By decomposition of the palladium complex it is possible to recover the palladium which subsequently can serve to prepare a palladium-containing composition to be used as the catalyst in the polymerization. Separation of the palladium complex from the palladium-containing solution may very suitably be carried out by contacting the solution with an ion exchanger.

The quantity of complexing agent that the palladium-containing copolymers are contacted with in the process of the invention is preferably at least 0.25 mol per gram atom of palladium present in the copolymers. Special preference is given to the use of at least 0.5 mol and more specifically the use of at least 1 mol of the complexing agent per gram atom of palladium present in the copolymers. The contacting of the copolymers with the complexing agent is preferably conducted at a temperature of 50-140°C and in particular at a temperature of 80-110°C.

Preferred complexing agents for palladium which can suitably be used in the process of the invention are organic compounds containing at least one element chosen from the group made up of phosphorus, arsenic, antimony and nitrogen. In addition to the compounds mentioned hereinbefore under 1)-5) hereinabove as possible catalyst components b), all of which can be suitably used, in principle, as complexing agents in the reduction of the palladium content of the copolymers, nitrogen-containing compounds, such as triethyl amine, naphthyl amine, aniline, pyridine, ethylene diamine and ethylene diamine tetraacetic acid and phosphorus-containing compounds, such as triphenyl phosphine, are also eligible for the purpose. Other complexing agents for palladium which can be employed in the process of this invention are carboxylates, such as acetates, cyanides, thiocyanates and acetylacetonates. Preferred complexing agents are compounds chosen from the group comprising triaryl phosphines, such as triphenyl phosphine, trialkyl amines, such as triethyl amine, and metal or ammonium salts of carboxylic acids with 1 to 8 carbon atoms, preferably acetates, such as sodium acetate.

As stated hereinbefore, the copolymerization is typically carried out in an organic liquid in which the palladium-containing catalyst composition can be dissolved, but in which the copolymers are insoluble. Very suitable organic liquids are lower alcohols, such as methanol and ethanol. During copolymerization, the polymers are obtained in the form of a suspension in the organic liquid. After the required degree of copolymerization is reached, the conversion can be terminated by cooling and releasing the pressure. The copolymers can be isolated from the suspension by filtration, washing and drying. The reduction of the palladium content of the copolymers according to the invention can be effected by renewed suspension of the copolymers thus prepared and by contacting this suspension with the complexing agent for palladium. It is, however, preferred to add the complexing agent to the reaction mixture at the moment of attaining the desired degree of copolymerization, which leads to termination of the copolymerization reaction.

Thus, it may be stated that the addition of a complexing agent for palladium during the copolymerization has two effects, viz. termination of the copolymerization and reduction of the palladium contents of the copolymers formed.

The invention will now be illustrated with the aid of the following Examples.

Example 1

A carbon monoxide/ethene copolymer was prepared as follows. A magnetically stirred autoclave of 250 ml capacity was charged with a catalyst solution comprising

150 ml of methanol,

0.1 mmol of $Pd(CH_3CN)_2(O_3S\text{-}C_6H_4\text{-}CH_3)_2$, and

0.15 mmol of N, N, N$^1$, N$^1$-tetrakis (diphenyl-phosphinomethyl) ethylene diamine.

After air present in the autoclave was removed by evacuation, the contents of the autoclave were brought to 84°C, and ethene was introduced until a pressure of 2250 kPa was reached, followed by carbon monoxide until a pressure of 4500 kPa was reached. After 2.5 hours the copolymerization was terminated by cooling to room temperature and then releasing the pressure. The copolymer formed was filtered off, washed with methanol and dried in vacuo at room temperature. The yield was 7.7 g of copolymer having a palladium content of 1100 ppmw, which means that 80% of the palladium present in the catalyst had remained behind in the copolymer.

Example 2

A carbon monoxide/ethene copolymer was prepared as follows. A mechanically stirred autoclave of 300 ml capacity was charged with 200 ml methanol. Air present in the autoclave was removed therefrom by pressurizing the autoclave with carbon monoxide until a pressure of 5000 kPa was reached, then releasing the pressure and repeating this procedure twice over. After the contents of the autoclave had been brought to 85°C, a 1 : 1 carbon monoxide/ethene mixture was introduced until a pressure of 55 bar was reached. Next, the autoclave was charged with a catalyst solution comprising

6 ml of methanol,

0.01 mmol of palladium acetate,

0.01 mmol of 2-methyl-2-(methyl-diphenyl-phosphino)-1,3-bis (diphenyl-phosphino) propane, and
0.01 mmol of trifluoromethane sulphonic acid.

The pressure was kept at 5500 kPa by the introduction of a 1 : 1 carbon monoxide/ethene mixture. After 3 hours, the copolymerization was terminated by cooling the reaction mixture to room temperature and releasing the pressure. The copolymer was filtered off, washed with 200 ml methanol and dried at 70°C. The yield was 18.5 g copolymer having a palladium content of 42 ppmw, which means that 81% of the palladium present in the catalyst had remained behind in the copolymer.

Example 3

A carbon monoxide/ethene copolymer was prepared as follows. A mechanically stirred autoclave of 250 ml capacity was charged with a catalyst solution comprising
50 ml of methanol,
0.01 mmol of palladium acetate,
0.15 mmol of ortho-(diphenyl-phosphino) benzene sulphonic acid.

After air present in the autoclave was removed by evacuation, ethene was introduced until a pressure of 2000 kPa was reached, followed by carbon monoxide until a pressure of 4000 kPa was reached. Then, the contents of the autoclave were brought to 80°C. After 5 hours, the copolymerization was terminated by cooling to room temperature and then releasing the pressure. The copolymer formed was filtered off, washed with methanol and dried at room temperature. The yield was 4.5 g copolymer having a palladium content of 1770 ppmw, which means that 75% of the palladium present in the catalyst had remained behind in the copolymer.

Example 4

A carbon monoxide/ethene/propene terpolymer was prepared as follows. A mechanically stirred autoclave of 300 ml capacity was charged with 200 ml methanol. Air present in the autoclave was expelled therefrom by purging the autoclave with carbon monoxide. After the contents of the autoclave had been brought to 85°C, carbon monoxide was introduced to create a pressure of 3000 pKa, followed by propene, until a pressure of 4000 kPa was reached and finally ethene, until a pressure of 5600 kPa was reached. Then the autoclave was charged with a catalyst solution comprising
4.5 ml of methanol,
1.5 ml of toluene,
0.01 mmol of palladium acetate,
0.012 mmol of 1,3-bis[di (2-methoxy-phenyl) phosphino] propane, and
0.2 mmol of trifluoro acetic acid.

The pressure was kept at 5600 kPa by introducing a 1 : 1 carbon monoxide/ethene mixture. After 4 hours, the copolymerization was terminated by cooling the reaction mixture to room temperature and releasing the pressure. The terpolymer was filtered off, washed with 200 ml methanol and dried at 70°C. The yield was 29 g terpolymer having a palladium content of 24 ppmw, which means that 67% of the palladium present in the catalyst had remained behind in the terpolymer.

Example 5

A carbon monoxide/ethene copolymer was prepared substantially in the same way as the copolymer of Example 2 except that the copolymerization was terminated after 3 hours by pumping a solution of 0.02 mmol of triethylamine in 6 ml methanol into the autoclave. After cooling to room temperature and releasing the pressure, the copolymer was filtered off, washed with 200 ml methanol and dried at 70°C. The yield was 20 g copolymer having a palladium content of 22 ppmw, which means that 42% of the palladium present in the catalyst had remained behind in the copolymer.

Example 6

A carbon monoxide/ethene/propene terpolymer was prepared substantially in the same way as the terpolymer of Example 4, except that now the copolymerization was terminated after 3 hours by pumping a solution of 0.08 mmol of triphenyl phosphine in 6 ml methanol into the autoclave. After cooling to room temperature and releasing the pressure, the terpolymer was filtered off, washed with 200 ml methanol and dried at 70°C. The yield was 20 g terpolymer having a palladium content of 10 ppmw, which means that 20% of the palladium present in the catalyst had remained behind in the terpolymer.

Example 7

A carbon monoxide/ethene/propene terpolymer was prepared substantially in the same way as the terpolymer of Example 6, the difference being that the copolymerization was terminated after 2.5 hours, by pumping a solution of 0.14 mmol of triethylamine in 6 ml of methanol into the autoclave. The yield was 8.8 g of terpolymer having a palladium content of 52 ppmw, which means that 46% of the palladium present in the catalyst had remained behind in the terpolymer.

Example 8

A carbon monoxide/ethene/propene terpolymer was prepared substantially in the same way as the terpolymer of Example 6, the difference being that the copolymerization was terminated after 5 hours, by pumping a solution of 7.1 mg of sodium acetate in 6 ml of methanol into the autoclave. The yield was 16.7 g of terpolymer having a palladium content of 17 ppmw, which means that 27% of the palladium present in the catalyst had remained behind in the terpolymer.

Of Examples 1-8, Example 5-8 are in accordance with the invention and examples 1-4 are given for the purpose of comparison.

With the aid of $^{13}C$-NMR analysis it was established that the carbon monoxide/ethene copolymers prepared in accordance with Examples 1-3 and 5 had a linear alternating structure and therefore consisted of units of the formula $-CO-(C_2H_4)-$. The copolymers had a melting point of 257°C.

It was also established with the aid of $^{13}C$-NMR analysis that the carbon monoxide/ethene/propene terpolymers prepared in accordance with Examples 4 and 6-8 had a linear structure and consisted of units of the formula $\{CO-(C_2H_4)\}$ and units of the formula $\{CO-(C_3H_6)\}$, which units occurred randomly distributed within the terpolymers. The terpolymers prepared in accordance with Examples 4 and 6-8 had melting points of 225, 224, 226 and 225°C, respectively.

## Claims

1. Process for removing palladium catalyst remnants from copolymers of carbon monoxide with one or more olefinically unsaturated compounds comprising contacting the copolymers with a complexing agent for palladium, such process being other than the contacting of copolymers of carbon monoxide and one or more olefinically unsaturated hydrocarbons that have been prepared in the presence of a palladium-bisphosphine catalyst, with an organic bidentate phosphine complexing agent.

2. Process as claimed in claim 1, characterized in that the copolymer is a copolymer of carbon monoxide with ethene, and optionally another olefinically unsaturated hydrocarbon.

3. Process as claimed in claim 1 or 2, characterized in that the copolymers are contacted with at least 0.25 mol of the complexing agent per gram atom of palladium present in the copolymers.

4. Process as claimed in one or more of claims 1-3, characterized in that the complexing agent is a triaryl phosphine.

5. Process as claimed in one or more of claims 1-3, characterized in that the complexing agent is a trialkyl amine.

6. Process as claimed in one or more of claims 1-3, characterized in that the complexing agent is a metal-or ammonium-salt of a carboxylic acid with 1 to 8 carbon atoms.

7. Process as claimed in one or more of claims 1-3, characterized in that the complexing agent is sodium acetate.

8. Process as claimed in any one of claims 1 to 7, characterized in that the complexing agent is added to the copolymerization reaction mixture at the moment of attaining the desired degree of copolymerization.

## Patentansprüche

1. Verfahren zur Entfernung von Palladiumkatalysator-Rückständen aus Copolymeren von Kohlenmonoxid mit einer oder mehreren olefinisch ungesättigten Verbindungen, indem die Copolymeren mit einem Komplexbildner für Palladium in Berührung gebracht werden, wobei das Verfahren ein anderes ist als das Inberührungbringen von Copolymeren von Kohlenmonoxid mit einem oder mehreren olefinisch ungesättigten Kohlenwasserstoffen, welche hergestellt worden sind in Gegenwart eines Palladium-Bisphospins als Katalysator mit Hilfe eines organischen zweizähnigen Phosphinkomplexbildners.

2. Verfahren nach Anspruch 1, dadurch **gekennzeichnet**, daß das Copolymer ein solches von Kohlenmonoxid mit Ethen und gegebenenfalls einem weiteren olefinisch ungesättigtem Kohlenwasserstoff ist.

3. Verfahren nach Anspruch 1 oder 2, dadurch **gekennzeichnet**, daß die Copolymeren mit mindestens 0,25 mol Komplexbildner je g Atom-Palladium in den Copolymeren zusammengebracht werden.

4. Verfahren nach einem oder mehreren Ansprüchen 1 bis 3, dadurch **gekennzeichnet**, daß der Komplexbildner ein Triarylphosphin ist.

5. Verfahren nach einem oder mehreren der Ansprüche 1 bis 3, dadurch **gekennzeichnet**, daß der Komplexbildner ein Trialkylamin ist.

6. Verfahren nach einem oder mehreren der Ansprüche 1 bis 3, dadurch **gekennzeichnet**, daß der Komplexbildner ein Metall- oder Ammoniumsalz einer Carbonsäure mit 1 bis 8 Kohlenstoffatomen ist.

7. Verfahren nach einem oder mehreren der Ansprüche 1 bis 3, dadurch **gekennzeichnet**, daß der Komplexbildner Natriumacetat ist.

8. Verfahren nach einem der Ansprüche 1 bis 7, dadurch **gekennzeichnet**, daß der Komplexbildner der Reaktionsmischung bei der Copolymerisation in dem Moment zugesetzt wird, wo der gewünschte Copolymerisationsgrad erreicht ist.

## Revendications

1. Procédé pour éliminer les résidus de catalyseur de palladium de copolymère du monoxyde de

carbone avec un ou plusieurs (d'un) composés à insaturation oléfinique, comportant la mise en contact des copolymères avec un agent complexant pour le palladium, ce procédé étant différent de la mise en contact des copolymères du monoxyde de carbone et d'un ou de plus d'un hydrocarbure à insaturation oléfinique qui ont été préparés en présence d'un catalyseur à la bisphosphine de palladium, avec un agent complexant organique bidenté à base de bidentase de phosphine.

2. Procédé tel que revendiqué dans la revendication 1, caractérisé en ce que le copolymère est un copolymère de monoxyde de carbone et d'éthène, et facultativement d'un autre hydrocarbure à insaturation oléfinique.

3. Procédé tel que revendiqué dans la revendication 1 ou 2, caractérisé en ce que les copolymères sont mis en contact avec au moins 0,25 mole de l'agent complexant par atome gramme de palladium présent dans les copolymères.

4. Procédé tel que revendiqué dans une ou plus d'une des revendications 1 à 3, caractérisé en ce que l'agent complexant est une triarylphosphine.

5. Procédé tel que revendiqué dans une ou plus d'une des revendications 1 à 3, caractérisé en ce que l'agent complexant est une trialkylamine.

6. Procédé tel que revendiqué dans une ou plus d'une des revendications 1 à 3, caractérisé en ce que l'agent complexant est un sel de métal ou d'ammonium d'un acide carboxylique possédant de 1 à 8 atomes de carbone.

7. Procédé tel que revendiqué dans une ou plus d'une des revendications 1 à 3, caractérisé en ce que l'agent complexant est l'acétate de sodium.

8. Procédé tel que revendiqué dans l'une quelconque des revendications 1 à 7, caractérisé en ce que l'agent complexant est ajouté au mélange réactionnel de copolymérisation au moment d'atteindre le degré approprié de copolymérisation.